# FASCICULE DE BREVET EUROPEEN

(11) **EP 0 898 998 B1**
(45) Date de publication et mention de la délivrance du brevet: **11.05.2005**
(21) Numéro de dépôt: 98402041.2
(22) Date de dépôt: 12.08.1998
(51) Int. Cl.: B01D 53/04

(54) **Appareil de séparation de gaz par adsorption et utilisation pour le traitement de flux d'air**
Vorrichtung zur Trennung von Gasen durch Adsorption und ihre Verwendung zur Behandlung von Luft
Apparatus for separating gas by adsorption and its use for treating air

(30) Priorité: 26.08.1997 FR 9710660
(43) Date de publication de la demande: 03.03.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Monereau, Christian, 75011 Paris (FR); Andreani, Philippe, 94270 Le Kremlin Bicetre (FR); Belot, Jean-Marc, 94210 La Varenne Saint Hilaire (FR); Dellon, Jean-Baptiste, 75013 Paris (FR)
(74) Mandataire: Le Moenner, Gabriel

(56) Documents cités:
- EP-A- 0 118 349
- EP-A- 0 759 320
- EP-A- 0 778 082
- DE-A- 19 600 549
- US-A- 4 374 095

## Description

La présente invention concerne les appareils de séparation de gaz par adsorption, plus particulièrement du type PSA ou VSA (pressure/vacuum swing adsorption) du type comprenant, disposés coaxialement dans une enveloppe d'axe vertical ayant un fond inférieur bombé comportant un passage de gaz central et un passage de gaz latéral, au moins un volume annulaire, d'au moins un matériau particulaire, reposant sur une paroi inférieure transversale, et au moins une première paroi prismatique pourvue d'ouvertures s'étendant entre le fond bombé et la paroi inférieure.

Ce type d'appareil de séparation, traitant des forts débits de gaz avec des séquences de cycle rapide, pose des problèmes de circulation et de distribution des gaz, encore accrus dans les appareils avec un transit horizontal de flux gazeux au travers de l'adsorbant, comme c'est le cas ici. D'autre part, le lit annulaire est délimité par une paroi inférieure qui doit supporter le poids du volume annulaire de matériau particulaire, les forces résultant des différences de pression de part et d'autre de cette paroi, en particulier lors des étapes de repressurisation ou de dépressurisation où se créent des pertes de charge, ainsi qu'éventuellement les forces résultant des moyens de tassement appliqués à la surface supérieure du volume de matériau particulaire.

Un appareil de séparation de gaz de ce type est décrit dans le document EP-A-0 759 320, au nom de la Demanderesse. Dans ce document, la paroi inférieure, plane, présente une épaisseur importante pour supporter les volumes de matériaux particulaires, l'espace à intérieur de ces derniers ainsi que l'espace entre la paroi inférieure et le fond bombé inférieur de l'enveloppe comportant des cloisons perforées pour homogénéiser les écoulements de flux gazeux dans ces espaces. Dans ce document, la paroi inférieure est essentiellement supportée par les éléments structurels formant le passage de gaz central.

A la suite de recherches intensives, la Demanderesse a constaté que la forme des parois inférieures des lits d'adsorbants avait des répercussions sensibles sur une bonne répartition des flux gazeux au travers du volume annulaire de matériaux particulaires et qu'elle pouvait en particulier créer des défauts de répartition d'écoulements gazeux qui ne se limitent pas aux zones adjacentes mais se répercutaient de façon non négligeable au sein même des volumes de matériaux particulaires.

La Demanderesse a ainsi mis en lumière que, malgré les problèmes de résistance mécanique que cela pose, les parois de fond ne devaient pas être bombées et devaient être très peu coniques et n'avoir aucune partie formant avec l'horizontale un angle excédant 15°. Avec de telles formes, pour atteindre la résistance mécanique requise, on peut, comme dans le document mentionné ci-dessus, prévoir une paroi de fond épaisse prenant, comme susmentionné, appui sur la conduite d'amenée centrale. Toutefois, outre les problèmes de surplus de poids, l'utilisation de parois épaisses accentue les transferts thermiques radiaux, ce qui modifie le profil de température des zones adjacentes des lits d'adsorbants, qui opèrent donc dans des conditions de températures différentes de celles qui se développent dans la partie adiabatique centrale de ces lits, empêchant ainsi d'atteindre le fonctionnement optimal de l'appareil. Il est également envisageable d'utiliser, sous la paroi inférieure, des raidisseurs radiaux, mais les études menées sur de telles architectures montrent que ces raidisseurs modifient sensiblement l'écoulement des gaz dans la partie inférieure de l'enveloppe en créant des canaux de circulation préférentiels vers le passage de gaz latéral.

La présente invention a donc pour objet de proposer de nouveaux agencements d'appareil de séparation de gaz par adsorption permettant, dans un agencement global robuste et de faibles coûts de fabrication, d'obtenir une distribution gazeuse optimale, avec une consommation énergétique minimale.

Pour ce faire, selon un aspect de l'invention, la paroi inférieure transversale comporte au moins une partie tronconique formant avec l'horizontale un angle n'excédant pas 15° et est supportée par la paroi prismatique prenant appui sur le fond bombé.

Selon une caractéristique particulière de l'invention, la paroi inférieure a une forme de V inversé et peut reposer sur une deuxième paroi prismatique délimitant intérieurement l'espace interne dans la partie inférieure de l'enveloppe.

Dans un tel agencement, à la différence du document sus-mentionné où la cloison perforée annulaire inférieure a pour seule fonction d'homogénéiser l'écoulement des gaz, la paroi inférieure présente un profil et une épaisseur optimisée, les charges exercées sur cette dernière étant reportées sur la partie bombée inférieure, robuste et rigide, de l'enveloppe, via une paroi prismatique épaisse, également robuste et rigide et assurant ici le double rôle de support et de distributeur de fluide.

D'autres caractéristiques et avantages de la présente invention ressortiront de la description suivante de modes de réalisation, donnés à titre illustratif mais nullement limitatif faite en relation avec les dessins annexés, sur lesquels :
- la figure 1 est une vue schématique partielle en coupe verticale d'un premier mode de réalisation d'un appareil de séparation de gaz selon l'invention; et
- la figure 2 est une vue partielle de la partie basse d'une autre variante de réalisation de l'invention.

Dans la description qui va suivre et sur les dessins, les éléments identiques ou analogues portent les mêmes chiffres de référence, éventuellement indicés.

Sur les figures on reconnait un appareil de séparation PSA ou VSA typiquement pour le traitement de flux d'air, en particulier pour la production d'oxygène impur, comprenant une enveloppe 1 à géométrie de révolution d'axe vertical en configuration d'utilisation avec un fond bombé inférieur 2 comportant un passage de gaz central 3 et un passage de gaz décalé ou latéral 4. Dans l'enveloppe 1 sont disposés un volume annulaire de particules d'adsorbant 5, typiquement une zéolithe, et un lit annulaire central coaxial, juxtaposé 6 de matériau particulaire destiné à retenir l'eau et le dioxyde de carbone, typiquement de l'alumine.

Le lit principal 5 est délimité périphériquement par une grille 7 à distance, radialement vers l'intérieur, de la virole périphérique de l'enveloppe 1, tandis que le lit central 6 est délimité intérieurement par une grille interne ou un tube distributeur central 8 dont l'extrémité inférieure est solidarisée à une paroi inférieure 9 de support d'adsorbant et à l'extrémité supérieure d'un tube distributeur divergeant 10 dont l'extrémité inférieure est solidarisée au passage de gaz central 3. Les lits 5 et 6 sont délimités en partie haute de l'adsorbeur par des moyens de rétention et de tassement 20.

Selon un aspect de l'invention, la paroi annulaire inférieure 9 de support d'adsorbeur est relativement mince, d'épaisseur inférieure à celle du fond bombé 2, typiquement inférieure à la moitié de cette dernière, et, outre son appui sur le diffuseur 10, est supportée par une paroi prismatique, avantageusement cylindrique, 11, d'épaisseur supérieure à celle de la paroi 9, coaxiale au tube diffuseur 10 et prenant appui sur le fond bombé 2 de l'enveloppe 1. La paroi 11, définit avec le tube 10 un espace interne inférieur 12 dans lequel débouche l'orifice de passage de gaz 4.

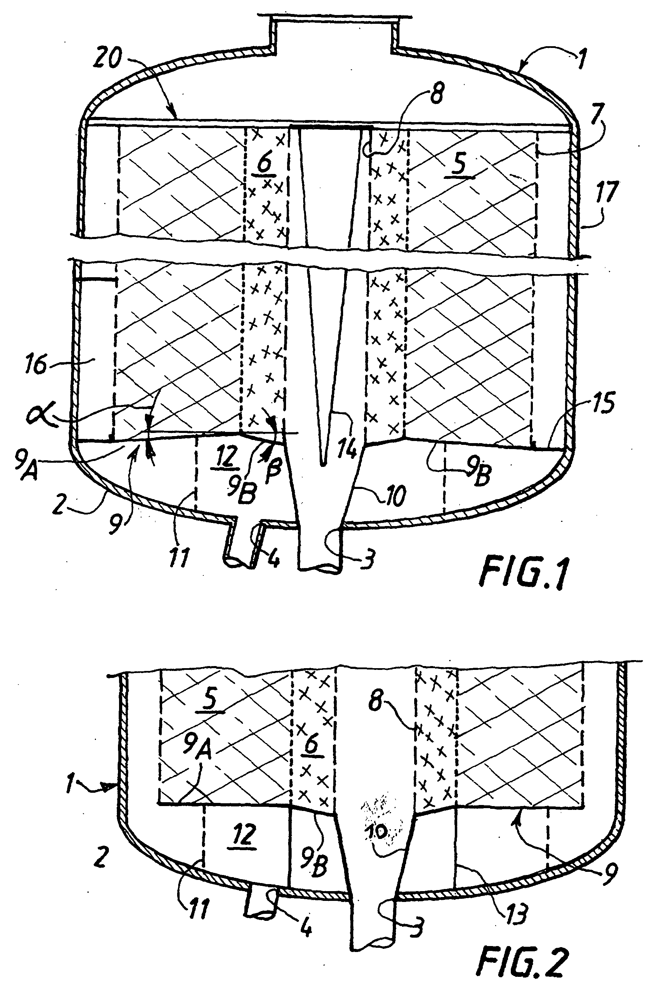

La paroi prismatique 11 peut être solidarisée à la paroi de fond 9 et reposer sur le fond 2. En variante, la paroi 9 peut simplement reposer sur la paroi prismatique 11, l'équipage interne étant centré, et supporté lors du transport éventuel de l'adsorbeur en position non-verticale, par des éléments d'entretoisement radiaux s'étendant entre la virole périphérique 17 de l'enveloppe 1 et la paroi annulaire 9, comme figuré en 15 sur la figure 1, et/ou entre la virole et la grille 7, comme la plaque figurée en 16 sur la figure 1.

La paroi prismatique 11 est formée avec une pluralité d'ouvertures sur toute sa périphérie et sur toute sa hauteur, le taux d'ajourage (surface des ouvertures par rapport à la surface totale théorique de la paroi 11) étant inférieur à 60 %, avantageusement inférieur à 30 % et typiquement compris entre 4 et 10 %.

Dans le mode de réalisation représenté sur la figure 1, la paroi inférieure 9 est, selon un aspect de l'invention, réalisée en forme de V inversé d'ouverture très large avec une première partie tronconique extérieure 9A descendant vers l'extérieur suivant un angle α avec l'horizontale et une partie tronconique intérieure 9B descendant vers l'intérieur suivant un angle β avec l'horizontale. Selon un aspect de l'invention, les angles α et β n'excèdent pas 15° et sont avantageusement compris entre 5° et 10°.

En variante, comme représenté sur la figure 2, la portion externe 9A peut être quasiment plane, la portion intérieure 9B conservant une conicité descendantes de plus de 5°.

Comme on le voit également sur cette figure 2, selon un aspect de l'invention, la structure de support de la paroi inférieure 9 peut être dédoublée en une paroi prismatique perforée 11 analogue à celle précédemment décrite, mais décalée vers la périphérie de la portion 9A, et une paroi centrale 13 coaxiale à la précédente et qui peut être sensiblement dépourvue d'ouvertures, si ce n'est pour favoriser la ventilation.

Dans ce mode de réalisation, l'espace interne 12 dans lequel débouche le passage de gaz latéral 4 est celui défini entre la paroi extérieure 11 et la paroi intérieure 13.

Dans un mode de réalisation particulier, représenté sur la figure 1, la chambre interne centrale à l'intérieur de la grille centrale ou tube distributeur 8 est munie centralement d'un profilé évolutif coaxial 14 favorisant une distribution homogène du gaz sur toute la hauteur des lits annulaires 5 et 6 pour la traversée de ceux-ci.

Les appareils selon l'invention trouvent principalement une application dans la séparation de gaz de l'air, notamment pour la production d'air enrichi ou d'oxygène impur.

## Revendications

1. Appareil de séparation de gaz par adsorption, comprenant, disposés coaxialement dans une enveloppe (1) d'axe vertical ayant un fond inférieur bombé (2) comportant un passage de gaz central (3) et un passage de gaz latéral (4), au moins un volume annulaire (5;6) d'au moins un matériau particulaire reposant sur une paroi inférieure transversale (9) et au moins une première paroi prismatique (11) pourvue d'ouvertures s'étendant entre le fond bombé (2) et la paroi inférieure (9), **caractérisé en ce que** la paroi inférieure transversale (9) comporte au moins une partie tronconique (9A, 9B) formant avec l'horizontale un angle n'excédant pas 15° et est supportée par la paroi prismatique (11) prenant appui sur le fond bombé (2).

2. Appareil selon la revendication 1, **caractérisé en ce que** la partie tronconique est la partie intérieure (98) de la paroi inférieure.

3. Appareil selon la revendication 2, **caractérisé en ce que** la partie tronconique intérieure (9B) descend vers l'intérieur.

4. Appareil selon l'une des revendications 3, **caractérisé en ce que** la paroi inférieure (9) est en forme de V inversé (9A, 9B).

5. Appareil selon l'une des revendications précédentes, **caractérisé en ce que** la paroi inférieure transversale (9) a une épaisseur inférieure à celle du fond inférieur bombé (2).

6. Appareil selon l'une des revendications précédentes, **caractérisé en ce que** la paroi inférieure (9) repose en outre sur une deuxième paroi prismatique coaxiale à l'axe vertical et délimitant avec la première paroi prismatique (11) un espace interne annulaire (12) dans lequel débouche le passage de gaz latéral (4).

7. Appareil selon l'une des revendications précédentes, **caractérisé en ce que** le taux d'ajourage de la paroi prismatique (11) est inférieur à 60%.

8. Appareil selon la revendication 7, **caractérisé en ce que** le taux d'ajourage de la paroi prismatique (11) est inférieur à 30%.

9. Appareil selon la revendication 8, **caractérisé en ce que** le taux d'ajourage de la paroi prismatique (11) est compris entre 4 et 10%.

10. Appareil selon l'une des revendications précédentes, **caractérisé en ce qu'**il comporte des moyens (15, 16) de centrage disposés radialement entre l'enveloppe (1 ) et le volume annulaire (5, 6).

11. Appareil selon l'une des revendications précédentes, **caractérisé en ce qu'**il comporte un diffuseur conique (10) reliant le passage de gaz central (3) au bord intérieur de la paroi inférieure (9).

12. Utilisation d'un appareil selon l'une des revendications précédentes pour le traitement de flux d'air.

## Patentansprüche

1. Vorrichtung zur Trennung von Gasen durch Adsorption, umfassend ein Gehäuse (1) mit senkrechter Achse und koaxial angeordnet in diesem Gehäuse (1), das einen unteren, gewölbten Boden (2) hat, umfassend einen zentralen Gaseinlass (3) und einen seitlichen Gaseinlass (4), wenigstens ein ringförmiges Volumen (5; 6) mit wenigstens einer speziellen Substanz, die auf einer unteren, waagrecht verlaufenden Wand (9) ruht, und wenigstens eine erste prismenförmige Wand (11), die mit Öffnungen versehen ist und die sich zwischen dem gewölbten Boden (2) und der unteren Wand (9) erstreckt, **dadurch gekennzeichnet, dass** die untere, waagrecht verlaufende Wand (9) wenigstens ein kegelstumpfförmiges Teilstück (9A, 9B) umfasst, das mit der Horizontalen einen Winkel von nicht mehr als 15° bildet und durch die prismenförmige Wand (11) gestützt wird, wobei diese auf dem gewölbten Boden (2) sitzt.

2. Vorrichtung nach Anspruch 1, **dadurch gekennzeichnet, dass** das kegelstumpfförmige Teilstück das innere Teilstück (9B) der unteren Wand ist.

3. Vorrichtung nach Anspruch 2, **dadurch gekennzeichnet, dass** das kegelstumpfförmige, innere Teilstück (9B) sich nach innen und nach unten neigt.

4. Vorrichtung nach einem der Ansprüche 2 und 3, **dadurch gekennzeichnet, dass** die untere Wand (9) die Form eines umgedrehten V (9A, 9B) hat.

5. Vorrichtung nach einem der vorherigen Ansprüche, **dadurch gekennzeichnet, dass** die untere, waagrecht verlaufende Wand (9) eine Dicke hat, die kleiner als diejenige des unteren, gewölbten Bodens (2) ist.

6. Vorrichtung nach einem der vorherigen Ansprüche, **dadurch gekennzeichnet, dass** die untere Wand (9) überdies auf einer zweiten, prismenförmigen Wand sitzt, die koaxial zu der senkrechten Achse verläuft und mit der ersten prismenförmigen Wand (11) einen ringförmigen Innenraum (12) abgrenzt, in den der seitliche Gaseinlass (4) mündet.

7. Vorrichtung nach einem der vorherigen Ansprüche, **dadurch gekennzeichnet, dass** der Anteil der Öffnungen in der prismenförmigen Wand (11) kleiner als 60 % ist.

8. Vorrichtung nach Anspruch 7, **dadurch gekennzeichnet, dass** der Anteil der Öffnungen in der prismenförmigen Wand (11) kleiner als 30 % ist.

9. Vorrichtung nach Anspruch 8, **dadurch gekennzeichnet, dass** der Anteil der Öffnungen in der prismenförmigen Wand (11) zwischen einschließlich 4 % und 10 % liegt.

10. Vorrichtung nach einem der vorherigen Ansprüche, **dadurch gekennzeichnet, dass** sie Zentrierungsmittel (15, 16) umfasst, die radial zwischen dem Gehäuse (1) und dem ringförmigen Volumen (5, 6) angeordnet sind.

11. Vorrichtung nach einem der vorherigen Ansprüche, **dadurch gekennzeichnet, dass** sie einen kegelförmigen Zerstäuber (10) umfasst, der den zentralen Gaseinlass (3) mit der Innenkante der unteren Wand (9) verbindet.

12. Verwendung einer Vorrichtung nach einem der vorherigen Ansprüche für die Behandlung von Luftstrom.

## Claims

1. Plant for the separation of gases by adsorption, comprising, arranged coaxially in a container (1) of vertical axis having a domed lower end (2) including a central gas passage (3) and a lateral gas passage (4), at least one annular volume (5; 6) of at least one particulate material resting on a transverse lower wall (9) and at least a first prismatic wall (11) provided with openings extending between the domed end (2) and the lower wall (9), **characterized in that** the transverse lower wall (9) comprises at least one frustoconical part (9A, 9B) forming an angle not in excess of 15° with the horizontal and is supported by the prismatic wall (11) bearing on the domed end (2).

2. Plant according to Claim 1, **characterized in that** the frustoconical part is the inner part (9B) of the lower wall.

3. Plant according to Claim 2, **characterized in that** the inner frustoconical part (9B) descends inwards.

4. Plant according to Claim 2 or 3, **characterized in that** the lower wall (9) is in the form of an inverted V (9A, 9B).

5. Plant according to one of the preceding claims, **characterized in that** the transverse lower wall (9) has a thickness less than that of the domed lower end (2).

6. Plant according to one of the preceding claims, **characterized in that** the lower wall (9) furthermore rests on a second prismatic wall, coaxial with the vertical axis and delimiting, with the first prismatic wall (11), an annular internal space (12) into which the lateral gas passage (4) opens.

7. Plant according to one of the preceding claims, **characterized in that** the aperture ratio of the prismatic wall (11) is less than 60%.

8. Plant according to Claim 7, **characterized in that** the aperture ratio of the prismatic wall (11) is less than 30%.

9. Plant according to Claim 8, **characterized in that** the aperture ratio of the prismatic wall (11) is between 4 and 10%.

10. Plant according to one of the preceding claims, **characterized in that** it includes centring means (15, 16) arranged radially between the container (1) and the annular volume (5, 6).

11. Plant according to one of the preceding claims, **characterized in that** it includes a conical diffuser (10) joining the central gas passage (3) to the inner edge of the lower wall (9).

12. Use of a plant according to one of the preceding claims for the treatment of air flows.
